(19) **Europäisches Patentamt**
**European Patent Office**
**Office européen des brevets**

(11) **EP 3 713 667 B1**

(12) **FASCICULE DE BREVET EUROPEEN**

(45) Date de publication et mention de la délivrance du brevet:
**26.03.2025 Bulletin 2025/13**

(21) Numéro de dépôt: **18800682.9**

(22) Date de dépôt: **19.11.2018**

(51) Classification Internationale des Brevets (IPC):
**B01J 19/10** (2006.01)    **C02F 1/36** (2023.01)

(52) Classification Coopérative des Brevets (CPC):
**B01J 19/10;** B01J 2219/0877; C02F 1/36;
Y02W 10/37

(86) Numéro de dépôt international:
**PCT/EP2018/081808**

(87) Numéro de publication internationale:
**WO 2019/101694 (31.05.2019 Gazette 2019/22)**

(54) **PROCEDE DE TRAITEMENT PAR DES ONDES ACOUSTIQUES**

**VERFAHREN ZUR BEHANDLUNG DURCH AKUSTISCHEN WELLEN**

**ACOUSTIC WAVES TREATMENT METHOD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.11.2017 FR 1771244**

(43) Date de publication de la demande:
**30.09.2020 Bulletin 2020/40**

(73) Titulaires:
• **Ching, Gil**
  **06620 Le Bar sur Loup (FR)**
• **Avignon Université**
  **84029 Avignon Cedex 01 (FR)**

(72) Inventeurs:
• **CHING, Gil**
  **83170 Brignoles (FR)**
• **CHARLES, Florence**
  **13440 Cabanne (FR)**
• **SALLANON, Huguette**
  **84470 Châteauneuf De Gadagne (FR)**

(74) Mandataire: **Axe PI**
  **7, place Ile de Beauté**
  **06300 Nice (FR)**

(56) Documents cités:
**EP-A1- 0 691 162        WO-A1-2014/014941**
**WO-A1-2015/089186    US-A1- 2003 234 274**

**Description**

L'invention concerne procédé de traitement de produits par des ondes acoustiques. Plus particulièrement, l'invention concerne l'utilisation d'un dispositif ou du système pour le traitement et/ou la décontamination de produits solides et/ou liquides, tels que par exemple l'eau polluée.

En France, l'estimation du coût complet annuel de la dépollution des excédents de l'agriculture et de l'élevage présents dans les eaux de surface et côtières s'élève à plus de 50 milliards d'euros. A cela s'ajoute la nécessité de dépolluer les eaux domestiques, les eaux issues des industries agroalimentaires et pharmaceutiques. La sonochimie a pour objet de minéraliser la matière organique qui se trouve dans les eaux, que celle-ci soit d'origine naturelle (déchets de matière vivante) ou d'origine synthétique (pesticides ou médicaments par exemple).

Le traitement des eaux usées a pour objet de maintenir l'intégrité de l'environnement et de préserver les sources d'eau destinées à la consommation humaine et donc de limiter le plus possible les rejets de matière organique dans l'environnement. La Directive 98/83/CE concerne la qualité des eaux destinées à la consommation humaine. Elle fixe les normes applicables à l'eau potable et a pour objectif de protéger la santé des personnes des effets néfastes de la contamination des eaux destinées à la consommation humaine en garantissant la salubrité et la propreté de celles-ci.

Pour faire face à la pollution aquatique, la solution la plus efficace reste la mise en place de mesures préventives plutôt que curatives. En effet, le coût du curatif peut représenter jusqu'à 87 fois celui du préventif.

En ce qui concerne les pollutions aquatiques issues des procédés agricoles, le plan Ecophyto initié en 2008 avait pour objectif de réduire l'usage des produits phytosanitaires. Le nouveau plan Ecophyto, réaffirme l'objectif de réduction de 50% du recours aux produits phytosanitaires en France en dix ans, en suivant une trajectoire en deux temps. D'abord, à l'horizon 2020, une réduction de 25% est visée, par la généralisation et l'optimisation des techniques actuellement disponibles. Ensuite, une réduction de 25% supplémentaires à l'horizon 2025 qui sera atteinte grâce à des mutations plus profondes. L'agriculture biologique, en interdisant les produits chimiques de synthèse, permet ainsi de prévenir et préserver la qualité de l'eau. Elle repose avant tout sur un ensemble de techniques agronomiques, sanitaires et sur une approche globale du système de production. Toutes ces pratiques agronomiques participent aussi à diminuer fortement les risques de lessivage. Une étude de l'INRA en 2003 a ainsi classé l'Agriculture Biologique comme étant la plus favorable à une eau de qualité.

Toutefois, même si l'Agriculture Biologique est en plein essor, elle ne représente aujourd'hui qu'une faible partie du territoire agricole. Ainsi, la surface agricole utile en Agriculture Biologique ne représente que 0,1% en Afrique, 0,8% en Amérique du Nord, 1,1% en Amérique latine, 0,3% en Asie ,2,4% en Europe et 4,1% en Océanie.

Compte tenu de ce qui précède, il existe aujourd'hui un besoin de continuer à lutter efficacement contre la pollution aquatique et donc d'améliorer ou de développer de nouveaux dispositifs de dépollution.

Le plan national résidus de médicaments (PNRM) a pour objectif d'évaluer le risque éventuel lié à la présence de molécules liés aux médicaments dans l'eau, les conséquences possibles pour l'écosystème et l'homme et d'engager des actions de réduction de la dispersion médicamenteuse dans l'eau. En effet, les médicaments sont des molécules fabriquées pour être biologiquement très actives. Elles appartiennent de plus à des familles de structures chimiques très diverses. Lors de la prise d'un médicament par une personne ou lors de son administration à un animal, une partie n'est pas totalement utilisée ou bien dégradée dans l'organisme. Ce sont ces « résidus de médicaments » qui seront excrétés dans les selles et les urines, rejoignant ainsi les réseaux des eaux usées ou l'environnement.

Il y a également les médicaments directement jetés « à l'évier » plutôt que d'être ramenés en pharmacie pour le recyclage. Actuellement, on estime que le gisement de médicaments non utilisés représente entre 24 000 et 29 000 tonnes par an. Une partie se retrouve ainsi jetée à l'égout.

En conséquence, les eaux usées domestiques contiennent également de la matière organique ou des matières en suspension (MES) mais aussi des résidus de pesticides et/ou de médicaments. Actuellement elles sont épurées essentiellement par des stations d'épuration à boues activées qui permettent l'élimination d'une partie de la matière organique mais qui génèrent des déchets, les boues, considérées comme déchets ultimes et qui doivent donc être incinérées, ce qui génèrent un coût énergétique important. L'élimination des pesticides et des médicaments n'est donc que très partielle.

De même, les eaux issues des procédés agroalimentaires ne sont que très partiellement traitées et des eaux relativement chargées en matière organique et pesticides rejoignent le réseau des eaux domestiques. Par exemple, l'importance de la charge en matière organique des eaux de lavage des fruits et légumes est un frein au recyclage de l'eau. L'utilisation de filtres est possible mais conduit rapidement à des colmatages, ce qui favorise l'utilisation de circuit ouvert et donc de grandes quantités d'eau.

En raison de la solubilité des pesticides et d'une grande partie des médicaments, les procédés classiques de traitement de l'eau (clarification, filtration sur sable, désinfection) sont généralement inefficaces pour leur élimination. Des traitements spécifiques comme l'adsorption sur charbon actif ou la filtration membranaire doivent alors être envisagés.

Même s'il existe aujourd'hui des filtres à charbon actif dont l'efficacité est prouvée, les limites du charbon actif imposent un changement très régulier des recharges, rendant leur utilisation fastidieuse, coûteuse voire polluante lorsque le recyclage des filtres n'est pas assuré. Le document WO 2015/089186 divulgue un dispositif et un procédé de traitement par ondes acoustiques dans les quels un liquide contenu dans une cuve allongée ouverte, dont la section transversale présente un rétrécissement progressif en direction de l'ouverture située sur la partie supérieure de ladite cuve, est soumis aux ondes de fréquence de 500 kHz et supérieur, focalisées au voisinage de l'ouverture de la cuve et sortant dans un conduit contenant l'échantillon traité.

Le document EP3009405 décrit un dispositif de traitement de l'eau par adsorption sur charbon actif en grains (CAG). Le procédé décrit une étape de traitement au cours de laquelle l'eau à traiter est mise en contact avec un matériau pulvérulent adsorbant en vue d'en abattre la teneur en matières organiques et en polluants tels que pesticides, perturbateurs endocriniens, résidus industriels et résidus de médicaments.

Mêmes si les propositions d'alternatives aux procédés de décontamination traditionnels sont nombreuses, elles restent à ce jour peu ou pas utilisées. Une des principales raisons à cela est que ces alternatives engendrent des coûts importants qui représentent un important frein à l'investissement.

Les conséquences des polluants aquatiques sur la santé sont aujourd'hui nombreuses. Certaines molécules chimiques des pesticides sont reprotoxiques, mutagènes voire cancérigènes.

Enfin, les pollutions aquatiques impactent directement d'autres filières comme la pêche et l'ostréiculture, les fragilisant parfois de manière irréversible alors qu'elles représentent un poids économique et social important.

Considérant ce qui précède, afin de résoudre les problèmes listés ci-dessus et notamment développer une alternative permettant notamment la dépollution des eaux, le Demandeur a élaboré un nouvel équipement et une nouvelle technologie, respectueux de l'environnement pour un traitement optimisé de produits solides et liquides, préférentiellement des eaux polluées, tout en limitant les effets indésirables observés dans l'art antérieur.

Une telle technologie mise en œuvre est avantageusement dite « verte », c'est-à-dire sans ajout de contaminant chimique, sans rejet pour l'environnement et sans production de sous-produits nocifs pour la santé.

L'invention a donc pour premier objet un procédé selon la revendication 1.

Elle a pour deuxième objet un procédé de traitement d'un produit solide situé dans la cuve, dans et/ou à la sortie du conduit, par des ondes acoustiques de haute fréquence, caractérisé en ce qu'il comprend les étapes suivantes selon lesquelles :

- un liquide est introduit dans la cuve d'un dispositif selon l'invention par un circuit d'écoulement ;

- des ondes acoustiques de haute fréquence, supérieure à 100 kHz, préférentiellement supérieure à 200kHz sont générées dans ladite cuve par l'élément piézo-électrique ;
- les ondes acoustiques se propagent dans la cuve et focalisent en un point situé au voisinage de la partie centrale de l'ouverture de la cuve et sortent dans le conduit ; lesdites ondes permettant le traitement du produit solide ; et
- le produit solide ainsi traité est récupéré.

Enfin, elle a pour sixième objet un procédé de traitement d'un liquide par des ondes acoustiques de haute fréquence, caractérisé en ce qu'il comprend les étapes suivantes selon lesquelles :

- le liquide à traiter est introduit dans la cuve d'un dispositif selon l'invention par un circuit d'écoulement ;
- des ondes acoustiques de haute fréquence, supérieure à 100 kHz, préférentiellement supérieure à 200kHz sont générées dans ladite cuve par l'élément piézo-électrique ;
- les ondes acoustiques se propagent dans la cuve et focalisent en un point situé au voisinage de la partie centrale de l'ouverture de la cuve et sortent dans le conduit ; lesdites ondes permettant le traitement du liquide ; et

- le liquide ainsi traité est récupéré en sortie de conduit ou en sortie de collecteur d'écoulement.

L'invention et les avantages qui en découlent seront mieux compris à la lecture de la description et des modes de réalisation non limitatifs qui suivent, rédigée au regard des figures annexées dans lesquelles :

- les figures 1 et 2 représentent des sections schématiques de modes de réalisation préférés de dispositifs selon l'invention ;
- la figure 3 représente un schéma de principe d'un système intégrant plusieurs dispositifs selon l'invention ; et
- la figure 4 illustre la focalisation des ondes acoustiques dans la cuve ou parabole et dans le conduit ou tube de sortie du dispositif selon l'invention.

L'invention concerne un procédé utilisant au moins un dispositif de traitement de produits par des ondes acoustiques.

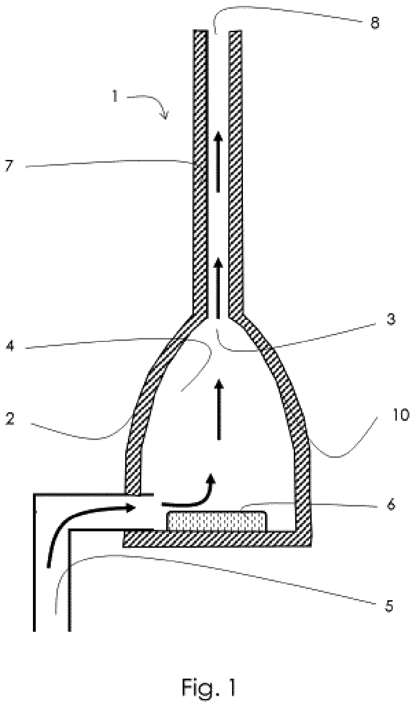

Comme cela est illustré aux figures 1, 2 et 3, le dispositif comprend:

- une cuve 2 préférentiellement sous forme de paraboloïde de révolution dont le point focal se situe préférentiellement au voisinage de la partie centrale de l'ouverture 3 de la cuve 2 et
- un conduit 7, ou tube de sortie,

dans lesquelles des ondes acoustiques se propagent.

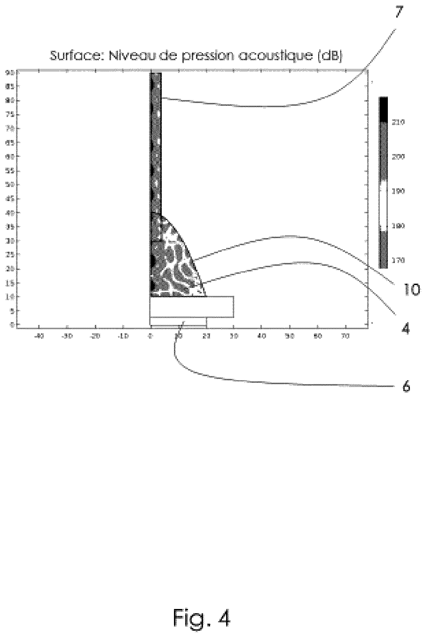

Le Demandeur a pu mettre en évidence, comme cela est illustré à la figure 4, que la focalisation acoustique dans la parabole et dans le tube de sortie 7 permettent notamment une dépollution optimisée des eaux.

En effet, La figure 4 met en évidence que les maximas de pressions acoustiques sont localisés dans le conduit 7.

Comme cela est illustré aux figures 1, 2 et 3, la présente invention a pour objet un dispositif 1 comportant une cuve allongée 2 fermée à l'une de ses extrémités sur laquelle est montée un élément piézo-électrique 6 apte à émettre des ondes dans un liquide 4.

La cuve allongée 2 selon l'invention est préférentiellement sous forme de parabole. Cette cuve allongée ouverte 2 est ainsi un réacteur à focalisation acoustique.

Selon l'invention, la paroi 10 de la cuve 2 et éventuellement du conduit 7 sont en matériaux durs, aptes à réfléchir les ondes, et sont préférentiellement conformés de manière à faire focaliser les ondes en un point situé au voisinage de la partie centrale de l'ouverture 3 de la cuve ou dans la partie centrale du conduit 7.

Par matériau dur, on entend selon la présente invention, un matériau suffisamment dur pour réfléchir les ondes en absorbant une énergie minimale. De préférence, le matériau dur est choisi parmi l'acier inoxydable, le verre borosilicate, le quartz, ou un métal présentant une rupture d'impédance par rapport au fluide traité et compatible avec le fluide à traiter.

Selon l'invention le conduit 7 est réalisé en dimensions et matériau adapté, le conduit 7 est le siège de propagation acoustique. Ce conduit peut être un tube circulaire rigide de section circulaire constante ou bien de section variable. Le diamètre du tube est préférentiellement compris entre 1 mm et 200 mm, plus préférentiellement entre 4 mm et 50 mm.

Selon l'invention, le conduit 7 peut être en matériau dit souple ou élastique c'est-à-dire que le diamètre du tube varie avec la pression dans le tube ou bien rigide, dans ce cas, le diamètre du tube est indépendant de la pression interne. Par exemple lorsque le tuyau est très souple, la vitesse de propagation est plus faible et ainsi la longueur d'onde dans le conduit 7 est réduite.

Grâce à l'élément piézo-électrique 6, des ondes acoustiques sont générées dans la cuve 2 qui est nécessairement remplie d'un liquide 4. L'élément piézo-électrique 6 est préférentiellement une céramique piézoélectrique ou un ensemble de céramiques piézo-électriques.

La famille des céramiques piézoélectriques comporte de nombreux éléments, tels que notamment les titanates de baryum (BaTiO3) ou encore les Zircono Titanates de Plomb (PZT ou LZT pour Lead Zirconate Titanate), qui sont les plus répandus et qui comptent à eux seuls cinq à six compositions différentes. De préférence, les céramiques utilisées sont des céramiques PZT (Titano-Zirconate de Plomb) telles que les céramiques PZT-4, PZT-5 ou PZT-8.

Plus préférentiellement, les céramiques utilisées sont des céramiques destinées à l'émission acoustique présentant un facteur de qualité supérieur à 500 telles que les PZT-5.

L'élément piézo-électrique 6, qui est préférentiellement une ou un ensemble de céramiques piézoélectriques, peut être disposé sur les parois extérieures et/ou intérieures de la cuve 2.

Les céramiques piézoélectriques peuvent être présentes sur tout type de parois, aussi bien des parois horizontales que des parois verticales.

De façon alternative, l'élément piézo-électrique peut être matérialisé par tout système capable de générer des ondes acoustiques de fréquences prédéfinies, par exemple des mono cristaux ou des céramiques composites.

Le dispositif objet de l'invention comprend un liquide 4 qui est préférentiellement de l'eau et qui permet la propagation ou diffusion des ondes dans la cuve 2 et dans le conduit 7.

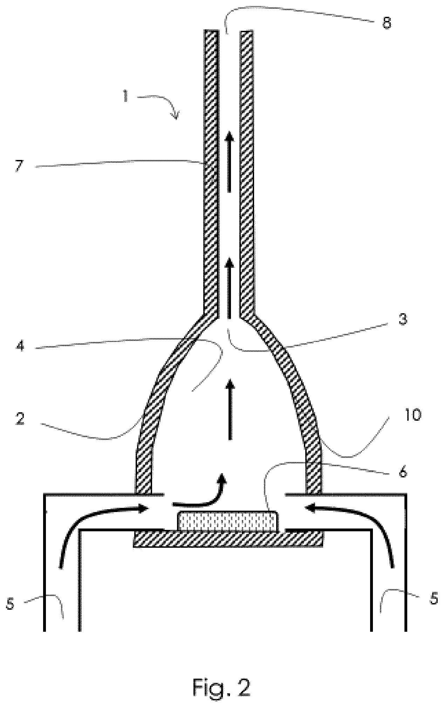

Comme cela est illustré aux figures 1 et 2, le liquide 4 est emmené dans la cuve 2 par un ou plusieurs circuits d'écoulement 5.

De préférence, le liquide 4 peut être :

- un liquide à traiter, ou
- un liquide de traitement permettant le traitement d'un produit situé dans la cuve 2, dans et/ou à la sortie du conduit 7.

Le liquide 4 à traiter contenu dans la cuve 2 peut par exemple être :

- de l'eau à potabiliser ;
- de l'eau comprenant des principes actifs à éliminer tels que des pesticides ; et/ou
- de l'eau contenant des microorganismes (virus, bactéries, etc.) à neutraliser.

Le liquide 4 de traitement contenu dans la cuve 2 peut par exemple être :

- de l'eau,
- de l'oxyde de calcium ou chaux vive, qui est généralement utilisée mélangée à de l'eau dans la proportion de 10 % ;
- des hypochlorites et notamment l'hypochlorite de sodium ou eau de Javel, qui est généralement utilisée mélangée à l'eau ;
- du dioxyde de chlore ;
- du chlorite de sodium ;
- du chlorate de sodium ;
- du chlorate de potassium ;
- de l'alcool qui est généralement soit de l'éthanol ou de l'isopropanol ;
- du peroxyde d'hydrogène ou eau oxygénée ;

- de l'iode ;
- de l'ozone ;
- du phénol et les composés phénoliques ;
- du permanganate de potassium ;
- des sels d'ammonium quaternaire ;
- du toluène ; et/ou
- du vinaigre ou acide acétique ;

lesdits composants ci-dessus étant utilisés seuls ou en mélange en vue de la préparation du liquide de traitement.

De préférence, le liquide de traitement 4 est de l'eau, douce ou saline. Plus préférentiellement, le liquide 4 est de l'eau douce. A titre d'exemple non limitatif d'eau douce utilisable, on peut citer l'eau potable telle que l'eau minérale, l'eau de source ou l'eau osmosée.

De préférence, l'eau utilisée dans le dispositif 1 selon l'invention est une eau potable.

De façon alternative, pour augmenter davantage le pouvoir traitant du dispositif selon l'invention, l'eau du liquide de traitement peut contenir un ou plusieurs autre(s) agent(s) de traitement choisis parmi les détergents et/ou les désinfectants.

Les détergents sont des agents dont le mode d'action est physique ou physico-chimique.

A titre non limitatif de détergent utilisable, on peut citer :

- les alcalins tels que notamment soude, potasse, carbonate et phosphate trisodique ;
- les acides tels que notamment les acides phosphoriques, nitriques et acétiques ; et
- les agents chélatants tels que le pyrophosphate de sodium et l'EDTA (acide éthylène diamine tétraacétique).

A titre d'exemple non limitatif de désinfectants utilisables, on peut citer :

- les halogènes en particulier le chlore et ses dérivés particulièrement faciles d'emploi et peu coûteux, notamment l'eau de Javel (hypochlorite de sodium) et le chlorocyanurates de sodium, ou encore les dérivés iodés ;
- les oxydes et peroxydes tels que l'eau oxygénée, l'ozone et l'acide péracétique ;
- les aldéhydes tels que formol et glutaraldéhyde ;
- les agents tensio-actifs et en particulier les ammoniums quaternaires ;
- les acides souvent utilisés pour les détartrages ;
- les bases plus souvent associées au chlore sous forme d'alcalins chlorés ;
- les alcools ; et
- les agents physiques tels que rayonnements ionisants et rayons UV.

Comme cela est illustré à la figure 4, selon l'invention, les ondes générées dans le liquide 4 par l'élément piézo-électriques sont focalisées au voisinage de l'ouverture 3 de la cuve 2. Cette focalisation acoustique qui démarre dans la parabole est prolongée dans le conduit 7 ou tube de sortie.

Ces ondes acoustiques générées vont permettre un traitement optimal des produits liquides et/ou solides à traiter ou modifier.

Les ondes acoustiques correspondent à une propagation de perturbations mécaniques dans un milieu élastique. Selon l'invention, le milieu élastique est matérialisé par le liquide 4.

Les ondes acoustiques se propagent dans le liquide 4 à la vitesse c (qui est dans l'eau d'environ 1500m/s). Les ondes acoustiques sont périodiques temporellement (fréquence f) et génèrent des perturbations locales en vitesse, pression et température.

La périodicité spatiale est caractérisée par la longueur d'onde

$$\lambda = c/f.$$

Dans certains cas, on utilise les effets mécaniques (variation de pression et de vitesse) des ondes US (ultrasonores) afin de solliciter les interfaces solide/liquide, c'est le cas du nettoyage.

Aux interfaces liquide/solide, la pression est maximale et la vitesse est nulle, la zone de liquide très proche de la surface solide est appelée couche limite acoustique.

Dès que l'on franchit cette couche limite, l'influence de la paroi disparait, si bien que dans la couche limite il y a un très fort gradient de vitesse et de pression. Toutes les particules adhérentes aux parois solides sont fortement sollicitées et peuvent être décrochées. On notera que l'épaisseur de cette couche limite est inversement proportionnelle à la fréquence de l'onde. Ce principe est notamment utilisé pour le nettoyage des parois.

Lorsque l'amplitude de l'onde acoustique augmente, la dépression est telle qu'une bulle de vapeur se forme, cette bulle est excitée à la fréquence de l'onde et évolue jusqu'à la cavitation et implosion. Ce phénomène est très énergétique et destructif (à éviter pour le nettoyage). L'implosion de ces bulles se traduit localement par une émission d'UV, par une onde pression de quelques centaines d'atmosphère, par des températures « solaires » et/ou par la création de radicaux libres OH-. La littérature décrit abondamment les effets de la cavitation, destruction des micro-organismes, destruction de médicaments jusqu'à leur minéralisation.

Chaque céramique 6 est alimentée par un générateur indépendant calé sur la fréquence de résonnance de la céramique.

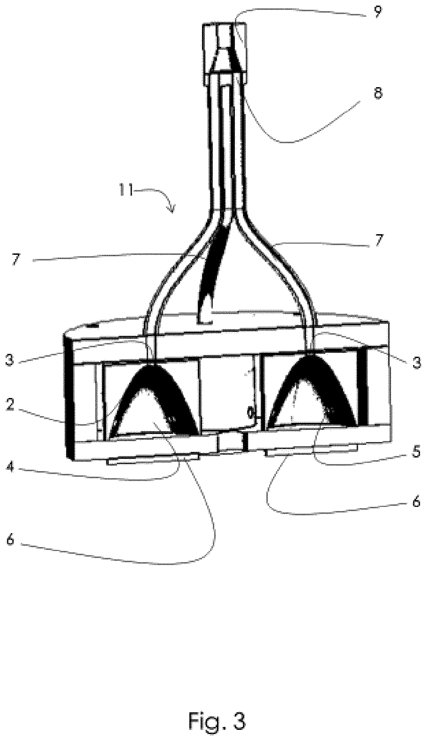

De préférence, lorsque plusieurs céramiques sont utilisées, comme cela est notamment illustré à la figure 3, chaque céramique 6 de chaque dispositif 1 du système 11 possède sa propre fréquence de résonnance. Deux céramiques d'un même lot de fabrication n'ont pas la même fréquence de résonnance.

De préférence, le module de réglage de l'élément piézo-électrique 6, qui est préférentiellement une céramique piézoélectrique, est une carte électronique de puissance. Ainsi, chaque céramique piézoélectrique est préférentiellement alimentée par une carte électronique de puissance lui fournissant une tension alternative correspondant à son propre mode de vibration.

Selon l'invention, l'élément piézoélectrique 6 du dispositif 1 produit dans la cuve 2, des ondes d'une fréquence supérieure à 100kHz, préférentiellement supérieure à 200 kHz. De préférence encore, la fréquence des ondes est supérieure à 500 kHz. De manière particulièrement avantageuse, la fréquence des ondes produites dans l'enceinte est comprise entre 1 MHz et 5 MHz. De tels ultrasons à haute fréquence supérieure à 1 MHz sont également appelés mégasons.

La fréquence des ultrasons ou ondes ultrasonores générées par l'élément piézo-électrique 6 est fondamentale. En effet, le principe du traitement (par exemple la stimulation, la transformation et/ou la décontamination) par utilisation du dispositif 1 selon l'invention est basé sur les effets mécaniques de l'onde acoustique. Le premier effet de la présence d'ondes acoustiques est de favoriser la dissolution des produits solubles. En effet, la vitesse particulaire de l'onde acoustique renouvelle le liquide en contact avec la partie souillée.

Comme indiqué ci-dessus et illustré à la figure 4, les ondes sont focalisées en sortie de cuve 2 dans une ouverture 3 puis sont canalisées dans un conduit 7 appelé également tube de sortie. Ceci est notamment dû au fait que la paroi 10 du dispositif peut être considéré comme un miroir acoustique qui permet une amplification par focalisation d'ondes acoustiques. La paroi ou miroir acoustique 10 permet en outre une canalisation fluidique. Ceci permet d'avoir un miroir de focalisation à double effet, à savoir la focalisation acoustique et la canalisation fluidique.

Le Demandeur a pu mettre en évidence qu'il était possible d'adapter la fréquence de l'onde acoustique en fonction du conduit 7 c'est-à-dire en fonction de la tuyauterie d'évacuation du réacteur ou dispositif 1. Ainsi, le fluide passe intégralement dans les zones de focalisation acoustique.

Par ailleurs, le conduit 7 du dispositif objet de l'invention peut être conçu et adapté de sorte que l'onde acoustique générée se propage selon des modes caractéristiques du conduit 7.

Le conduit 7 dans lequel le fluide s'écoule après la focalisation acoustique est un guide d'onde.

La notion de guide d'onde est liée au fait que les parois du tube présentent une rupture d'impédance par rapport au fluide.

L'impédance est notée

$$Z = \rho * c$$

avec « $\rho$ » qui correspond à la masse volumique du fluide et « $c$ » qui correspond à la célérité du son dans le fluide.

A titre d'exemple un bon réflecteur comme l'acier a une impédance de $45 \times 10^6$. L'air avec une impédance de 400 est aussi un excellent réflecteur. Ces impédances sont à comparer à l'impédance de l'eau qui vaut $1.5 \times 10^6$.

Le coefficient de réflexion R entre le matériau 1 et le matériau 2 est défini par la formule :

$$R = abs[(Z1-Z2)/Z1+Z2)]$$

On cherche idéalement un coefficient R > 0.6

En se limitant à mode zéro (mode axisymétrique) pour simplifier l'approche on écrit la pression acoustique dans ce tuyau :

$$P(r,z)=P_0 \, J_0(k_r * r) \, Exp[\, i*(k_z * z + \omega * t)]$$

avec :

$$k_z^2 + k_r^2 = (\omega / c)^2$$

dans laquelle

| | |
|---|---|
| r | est la position radiale dans le conduit (tube) |
| z | est la position axiale |
| $P_0$ | est e module de la pression |
| $\omega=2*\pi*f$ | est la pulsation |
| $J_0$ | est la fonction de Bessel de première espèce |
| c | est la célérité du son dans le liquide |
| $k_z$ | est le nombre d'onde axial |
| $k_r$ | est le nombre d'onde radial |

Le couplage entre le fluide interne au conduit (tube appelé également guide d'onde) et la paroi du tube est une condition d'imperméabilité, ce qui impose que la vitesse radiale du fluide est égale à la vitesse normale de la paroi (déplacement radial).

Ce couplage permet de coupler la déformation du conduit au nombre d'onde radial « kr ».

Ainsi en écrivant la condition limite pour le rayon intérieur du tube, on a plusieurs familles d'ondes répondant à cette condition limite.

Cette condition permet, pour une fréquence f donnée, de fixer une série de nombres d'onde possibles. Selon que le nombre d'onde radial est un nombre réel ou imaginaire, les ondes dans le tube seront propagatives ou évanescentes.

Selon l'invention, pour des fréquences supérieures à100kHz, le conduit (tube appelé également guide d'onde) a un diamètre compris ente 4mm et 50mm. Le conduit peut être un tube multicouche de matériaux variés, notamment en métal, plastique ou verre.

La couche interne est compatible avec le fluide. En revanche, la constitution des autres couches est quelconque.

A titre d'exemple, le conduit ou tube peut être un tube d'acier simple, ou bien un tube plastique fin seulement capable de résister à la pression du fluide. Dans le cas d'un tube acier, la rupture d'impédance est assurée par le tube acier seul, dans le cas du tube fin en plastique la rupture d'impédance est assurée par la présence de l'air extérieur au tube.

Selon la puissance acoustique fournie par les éléments piézoélectriques 6, le dispositif selon l'invention peut être appliqué à différents domaines industriels.

Le Demandeur a pu mettre en évidence que le dispositif utilisé dans le procédé objet de l'invention présentait notamment les avantages suivants :

- la décomposition des fonctions : source acoustique et focalisation (la céramique plane génère une onde plane et la focalisation est assurée par un réflecteur externe, contrairement à une céramique en forme de cuvette) ;
- la possibilité de mélanger plusieurs sources acoustiques de fréquences différentes dans le même miroir de focalisation ; le but est par exemple d'augmenter la probabilité de création de bulles de cavitation (plusieurs céramiques peuvent générer des ondes acoustiques qui seront focalisées par le même réflecteur);
- le fait que la zone de traitement est un passage obligé du fluide, c'est-à-dire que la totalité du fluide passe par le conduit 7 (le dispositif est tel que l'orifice de sortie est placé après la focalisation et éventuellement après le tube guide d'onde) ;
- le temps d'exposition au traitement peut être contrôlé en contrôlant le débit de l'écoulement (le débit de l'écoulement fixe le temps de passage dans le conduit, l'énergie acoustique reçue par le fluide traité est contrôlé) ;
- la géométrie simple favorise le traitement des fluides en ligne ;
- la possibilité d'isoler complètement la céramique piézoélectrique du fluide traité ; ainsi la céramique peut être collée sur un substrat compatible du liquide à traiter donc l'épaisseur sera optimisée pour la fréquence de fonctionnement choisie ;
- les matériaux utilisés sont courants et de faibles coûts ;
- la possibilité de propager une onde acoustique de forte puissance dans le tube de sortie après focalisation, notamment en adaptant le matériau du conduit 7 (par exemple diamètre et épaisseur) ;
- la possibilité de mettre l'ensemble du dispositif en dépression afin d'atteindre plus facilement le seuil de cavitation, par exemple en utilisant le dispositif en aspiration plutôt qu'en compression ;
- le fait que le dispositif est particulièrement adapté à l'excitation en mode transitoire, ce qui permet d'améliorer le rendement (exploitation des effets de non linéarité de l'acoustique : fonctionnement intermittent ou excitation de plusieurs céramiques de fréquence de résonance différente focalisées dans le même réflecteur) ;
- la possibilité d'une régulation en amplitude acoustique ; dans les cas où l'effet recherché est de ne pas déclencher de cavitation, par exemple lors d'homogénéisation ou du nettoyage des parois ;
- la régulation en modulation de largeur d'impulsion (PWM pour « Pulse-width modulation ») intermittence de l'émission possible ;
- la modulation en fréquence acoustique sur une bande de fréquence ; par exemple pour éviter les modes résonnants dans le conduit 7 ;
- la régulation du débit de fluide traité possible ; et
- la possibilité d'auto pompage (effet de pompage du fluide grâce aux effets non linéaires de l'acoustique de forte puissance).

Le Demandeur a pu mettre en évidence que, pour la cavitation dite "cavitation forte", la bulle contient la phase gazeuse du liquide support de l'onde acoustique. La bulle soumise aux variations de pression acoustique oscille puis implose. Au moment de l'implosion, des pressions très intenses sont générées, de même que de fortes élévations de température. On peut alors constater des émissions lumineuses.

Cette "cavitation forte" est à comparer à la "cavitation faible" pour laquelle la bulle est constituée de gaz dissous présents dans le liquide 4. Dans ce cas il n'y a pas de rayonnement lumineux.

L'utilisation d'ultrasons de très haute fréquence, de préférence des mégasons, permet d'avoir une plage très large de puissance acoustique sans atteindre la cavitation forte. Le dispositif objet de l'invention permet de contrôler la présence de cavitation forte, grâce à la signature acoustique caractéristique de la cavitation forte.

De façon avantageuse, le Demandeur a ainsi pu démontrer que le traitement par ondes mégasoniques est particulièrement adapté aux substrats ou produits fragiles. Le dispositif 1 envisagé met en œuvre des ultrasons de très haute fréquence, de préférence des mégasons, sans jamais atteindre la cavitation forte.

Comme il ressort de la figure 3, la présente invention a également pour objet un système 11 comprenant au moins deux dispositifs 1 selon l'invention.

Ce système 11 comprend en outre un collecteur d'écoulement 9 qui correspond aux différentes sorties 8 des différents conduits 7 des dispositifs selon l'invention.

Le dispositif selon l'invention est utilisé pour le traitement par des ondes acoustiques.

Selon l'invention, on entend par traitement la modification du liquide ou du produit solide à traiter, par exemple le nettoyage, la stimulation, la décontamination, la stérilisation, la solubilisation ou la minéralisation.

Ainsi, l'invention a également pour objet l'utilisation d'un dispositif ou d'un système selon l'invention, pour le traitement de produits liquides et/ou solides.

Plus particulièrement, le demandeur a pu mettre en évidence que le dispositif utilisé dans le procédé objet de l'invention permettait notamment:

- la minéralisation de produits solubilisés dans le liquide 4 appelé également fluide porteur ;
- la destruction de principes actifs tels que des pesticides ou médicaments, par exemple avant rejet dans les eaux usées ;
- le traitement de l'eau afin de la « potabiliser » (environnement, traitement des piscines, ...)
- la destruction de microbes, virus, microorganismes de tous types.
- le nettoyage de tube de type endoscope, ledit tube étant placé dans le conduit 7 ou à sa sortie 9, après le miroir 10 de focalisation, ce qui permet notamment le décrochage et la destruction de biofilms adhérant aux parois ;
- une stérilisation locale de produits par utilisation notamment d'un système 11 tel qu'illustré à la figure 3 dans lequel le collecteur d'écoulement 9 agit comme un nettoyeur à eau à haute pression.

L'invention a également pour objet l'utilisation d'un dispositif ou d'un système selon l'invention, pour :

- l'extraction de principes actifs ;
- la solubilisation ou l'homogénéisation de produits liquides et/ou solides dans le liquide 4 ;
- la fabrication d'émulsion ;
- la préparation de colloïdes ; et/ou
- la préparation de composés chimiques ;

Plus particulièrement, le demandeur a pu mettre en évidence que le dispositif ou le système objets de l'invention permettaient notamment :

- l'extraction rapide de principes actifs provenant par exemple de végétaux,
- la lyse cellulaire ;
- l'augmentation de la vitesse de solubilisation de solide dans un liquide ;
- la fabrication d'émulsions stables composées de plusieurs produits non miscibles tels que des peintures ou des cosmétiques ;
- la préparation de colloïdes;
- la préparation de composés chimiques par catalyse acoustique ;
- la dispersion, la désagrégation, ou l'homogénéisation de produits comportant des agrégations, notamment pour la préparation de peinture ou de crèmes ;

Par ailleurs, le Demandeur a pu mettre en évidence que le dispositif selon l'invention permettait également une réalisation adaptée à la chimie. Ainsi, au lieu d'utiliser des métaux sensibles à la chimie, il est possible d'utiliser des matériaux compatibles tels que le pyrex, le quartz ou bien des métaux recouverts de revêtement compatibles.

Selon un mode de réalisation alternatif de l'invention, le dispositif ou le système associé peut être utilisé pour le traitement d'aliments d'origine animale. Ainsi, le dispositif est notamment particulièrement adapté au saumurage des aliments, préférentiellement le saumurage des aliments d'origine animale, plus préférentiellement encore du jambon.

De façon surprenante, le Demandeur a pu mettre en évidence que l'utilisation de saumure dans une cuve ou dans une enceinte, suivie d'un traitement des aliments par le système selon l'invention, permet notamment de réduire le temps de saumurage.

Ainsi, l'invention a également pour objet l'utilisation d'un système selon l'invention, pour le saumurage d'aliments insérés dans une enceinte, préférentiellement d'aliments d'origine animale.

Le Demandeur a également pu mettre en évidence que le système utilisé dans l' objet de l'invention permet la modification du métabolisme d'un organisme, d'un organe ou d'un tissu, préférentiellement la modification ex *vivo* lorsque l'organisme, l'organe ou le tissu est inséré dans une enceinte.

Un organisme selon l'invention est un système complexe, organisé, qui est le produit de variations successives au cours de l'évolution. Il est constitué d'une ou plusieurs cellules (d'organisme unicellulaire ou multicellulaire).

Selon l'invention, un organe est un ensemble de tissus spécifiques d'un organisme capable de remplir une ou plusieurs fonctions déterminées.

Selon l'invention, un tissu vivant est le niveau d'organisation intermédiaire entre la cellule et l'organe. Un tissu forme un ensemble fonctionnel, c'est-à-dire que ses cellules concourent à une même fonction.

De préférence, l'organisme, l'organe ou le tissu sont d'origine animale ou végétale.

Plus particulièrement, le Demandeur a notamment pu montrer que le système permettait de créer sur les végétaux des forces d'arrachement dans la couche limite de certaines plantes.

Le système selon l'invention peut donc être utilisé pour modifier les échanges entre les organismes, les organes ou les tissus et un liquide de traitement.

Il apparait que la création d'une stimulation mécanique à la surface des cellules est perçue par un organisme vivant, de préférence la plante, comme un stress qui modifie la perméabilité (action directe sur les canaux membranaires, sur les lipides, sur le potentiel électrique transmembranaire, sur la conformation des protéines, ...). Cette stimulation mécanique déclenche une cascade de réactions cellulaires, jusqu'à une néosynthèse de métabolites primaires et secondaires.

De façon avantageuse, le système utilisé dans le procédé objet de l'invention, permet ainsi la modification du métabolisme d'un organisme, d'un organe ou d'un tissu, préférentiellement la modification ex *vivo* lorsque l'organisme, l'organe ou le tissu est inséré dans une enceinte, ladite modification permettant par exemple la néosynthèse de métabolites primaires et/ou secondaires.

Le système selon l'invention peut ainsi avantageusement être utilisé pour modifier le métabolisme d'organismes, d'organes ou de tissus soit en stimulant soit en réprimant la synthèse des composés cellulaires.

Avantageusement, le système objet de l'invention peut être utilisé pour modifier le métabolisme d'un organisme, d'un organe ou d'un tissu par stimulation de sa croissance. Préférentiellement, l'organisme est un organisme végétal, l'organe est un organe végétal et le tissu est un tissu végétal.

Le dispositif objet de l'invention peut également être utilisé pour augmenter les défenses d'un organisme végétal, d'un organe végétal ou d'un tissu végétal, face à l'infection par un agent pathogène qui est préférentiellement un champignon.

Le Demandeur a pu mettre en évidence que le traitement des racines par le dispositif selon l'invention stimule la croissance des plantes et augmente les défenses des feuilles face à l'infection par un champignon pathogène. Ces deux exemples montrent que les effets du traitement ne se limitent pas à l'organe traité, mais induisent une réponse systémique globale de la plante et une modification du métabolisme.

L'invention a également pour objet un procédé de traitement d'un produit solide situé dans la cuve 2, dans et/ou à la sortie du conduit 7, par des ondes acoustiques de haute fréquence, caractérisé en ce qu'il comprend les étapes suivantes selon lesquelles :

- un liquide 4 est introduit dans la cuve 2 d'un dispositif 1 selon l'invention par un circuit d'écoulement 5 ;
- des ondes acoustiques de haute fréquence, supérieure à 100 kHz, préférentiellement supérieure à 200kHz sont générées dans ladite cuve 2 par l'élément piézo-électrique (6) ;
- les ondes acoustiques se propagent dans la cuve 2 et focalisent en un point situé au voisinage de la partie centrale de l'ouverture 3 de la cuve et sortent dans le conduit 7 ; lesdites ondes permettant le traitement du produit solide ; et
- le produit solide ainsi traité est récupéré.

Selon un premier mode de réalisation, le liquide 4 est un liquide de traitement permettant le traitement du produit solide.

Selon un deuxième mode de réalisation, le liquide 4 est un liquide à traiter permettant à la fois de traiter le produit solide, mais également le produit à traiter introduit dans le circuit d'écoulement 5.

Enfin, l'invention a pour dernier objet un procédé de traitement d'un liquide 4 par des ondes acoustiques de haute fréquence, caractérisé en ce qu'il comprend les étapes suivantes selon lesquelles :

- le liquide à traiter 4 est introduit dans la cuve 2 d'un dispositif 1 selon l'invention par un circuit d'écoulement 5 ;

- des ondes acoustiques de haute fréquence, supérieure à 100 kHz, préférentiellement supérieure à 200kHz sont générées dans ladite cuve 2 par l'élément piézo-électrique 6 ;
- les ondes acoustiques se propagent dans la cuve 2 et focalisent en un point situé au voisinage de la partie centrale de l'ouverture 3 de la cuve et sortent dans le conduit 7 ; lesdites ondes permettant le traitement du liquide 4; et
- le liquide ainsi traité est récupéré en sortie de conduit 7 ou en sortie de collecteur d'écoulement 9.

La présente invention va maintenant être illustrée au moyen des exemples suivants :

Exemple 1 : Nettoyage d'un endoscope contaminé par des bactéries, des virus et des champignons :

Le nettoyage se fait par circulation de produit bactéricide, sporicide et virucide.

Le temps de traitement pour un cycle est de 30 mn et il y a trois cycles.

Le Demandeur superpose à cette circulation une onde acoustique propagative. Ainsi les parois internes de l'endoscope vont être soumises à des fortes variation de pressions, à un fort gradient de vitesse dû à la couche limite acoustique.

Ceci permet le décrochement du biofilm et des micro-organismes, qui sont entrainés par l'écoulement.

La fréquence et la puissance acoustique sont adaptés aux propriétés acoustiques du guide d'onde constitué par le tube de l'endoscope, car les modes capables de se propager dans le tube dépendent du diamètre et de la souplesse de sa paroi.

Exemple 2 : Préparation de produits à mélanger :

Le dispositif selon l'invention peut aussi être utilisé avantageusement pour la préparation de mélanges.

Les produits à mélanger ou à faire réagir sont introduits dans la cuve 2 avant la zone de focalisation. Puis l'acoustique concentrée dans le conduit 7 intervient comme catalyseur. En sortie de tube, le produit final est obtenu.

Le dispositif convient aussi pour réaliser des solutions colloïdales stables.

**Revendications**

1. Procédé de traitement d'un liquide (4) par des ondes acoustiques de haute fréquence dans un dispositif (1) d'un système (11) comprenant au moins deux dispositifs (1), pour le traitement par des ondes acoustiques, lesdits dispositifs comprenant au moins :

- une cuve allongée ouverte (2) dont la section transversale présente un rétrécissement progressif en direction d'une ouverture (3) située sur la partie supérieure de ladite cuve et

- un élément piézo-électrique (6), ladite cuve étant remplie d'un liquide (4), l'élément piézo-électrique (6) étant apte à émettre des ondes dans ledit liquide (4), lesdites ondes étant focalisées au voisinage de l'ouverture (3) de la cuve et sortant dans un conduit (7),
**caractérisé en ce que** les sorties (8) des différents conduits (7), ayant un diamètre compris entre 4 mm et 50 mm, des dispositifs (1) convergent en un collecteur d'écoulement (9) et **en ce que** les ondes produites dans chaque dispositif (1) par l'élément piézo-électrique (6) dans la cuve (2) et/ou dans le conduit (7) ont une fréquence supérieure à 100 kHz.
et **caractérisé en ce qu'**il comprend les étapes suivantes selon lesquelles :

- un liquide à traiter (4) est introduit dans la cuve (2) dudit dispositif par un circuit d'écoulement (5) ;
- des ondes acoustiques de haute fréquence, supérieure à 100 kHz, préférentiellement supérieure à 200kHz sont générées dans ladite cuve (2) par l'élément piézo-électrique (6) ;
- les ondes acoustiques se propagent dans la cuve (2) et focalisent en un point situé au voisinage de la partie centrale de l'ouverture (3) de la cuve et sortent dans le conduit (7) ; lesdites ondes permettant le traitement du liquide (4) ; et
- le liquide ainsi traité est récupéré en sortie de conduit (7) ou en sortie de collecteur d'écoulement (9).

**2.** Procédé selon la revendication 1, **caractérisé en ce que** le liquide (4) est :

- un liquide à traiter, et/ou
- un liquide de traitement permettant le traitement d'un produit solide situé dans la cuve (2), dans et/ou à la sortie du conduit (7).

**3.** Procédé selon l'une des revendications 1 ou 2, **caractérisé en ce que** les ondes produites dans le dispositif (1) par l'élément piézo-électrique (6) dans la cuve (2) et/ou dans le conduit (7) ont une fréquence supérieure à 200 kHz.

**4.** Procédé selon la revendication 3, **caractérisé en ce que** les ondes produites dans le dispositif (1) par l'élément piézo-électrique (6) dans la cuve (2) et/ou dans le conduit (7) ont une fréquence comprise entre 1 MHz et 5 MHz.

**5.** Procédé selon l'une des revendications précédentes, **caractérisé en ce que** les parois de la cuve (2) et du conduit (7) dans le dispositif (1) sont en matériau dur, apte à réfléchir les ondes, et sont préférentiellement conformées de manière à faire focaliser les ondes en un point situé au voisinage de la partie centrale de l'ouverture (3) de la cuve et/ou dans la partie centrale du conduit (7).

**6.** Procédé selon l'une des revendications précédentes, **caractérisé en ce que** la cuve (2) du dispositif (1) présente une forme de paraboloïde de révolution dont le point focal se situe au voisinage de la partie centrale de l'ouverture (3) de la cuve.

**7.** Procédé selon l'une des revendication précédentes, **caractérisé en ce que** ledit système (11) est utilisé pour le nettoyage, et/ou la décontamination de produits liquides et/ou solides.

**8.** Procédé selon l'une des revendications précédentes, **caractérisé en ce que** ledit système (11) est utilisé pour le traitement de produits liquides et/ou solides, préférentiellement pour :

- la minéralisation de produits solubilisés dans le liquide (4) appelé également fluide porteur;
- la destruction de principes actifs tels que des pesticides ou médicaments avant rejet dans les eaux usées ; ou
- le traitement de l'eau afin de la « potabiliser ».

**9.** Procédé selon l'une des revendications précédentes, **caractérisé en ce que** ledit système (11) est utilisé pour :

- l'extraction de principes actifs ;
- la solubilisation ou l'homogénéisation de produits liquides et/ou solides dans le liquide 4 ;
- la fabrication d'émulsion ;
- la préparation de colloïdes ; et/ou de composés chimiques.

**10.** Procédé de traitement d'un produit solide situé dans la cuve (2), dans et/ou à la sortie du conduit (7) d'un dispositif (1) d'un système (11),

comprenant au moins deux dispositifs (1), pour le traitement par des ondes acoustiques, lesdits dispositifs comprenant au moins :

- une cuve allongée ouverte (2) dont la section transversale présente un rétrécissement progressif en direction d'une ouverture (3) située sur la partie supérieure de ladite cuve et
- un élément piézo-électrique (6), ladite cuve étant remplie d'un liquide (4), l'élément piézo-électrique (6) étant apte à émettre des ondes dans ledit liquide (4), lesdites ondes étant focalisées au voisinage de l'ouverture (3) de la cuve et sortant dans un conduit (7),

**caractérisé en ce que** les sorties (8) des différents conduits (7), ayant un diamètre compris entre 4 mm et 50 mm, des dispositifs (1) convergent en un collecteur d'écoulement (9) et **en ce que** les ondes produites dans chaque dispositif (1) par l'élément piézo-électrique (6) dans la cuve (2) et/ou dans le conduit (7) ont une fréquence supérieure à 100 kHz,

par des ondes acoustiques de haute fréquence, **caractérisé en ce qu'**il comprend les étapes suivantes selon lesquelles :

- un liquide (4) est introduit dans la cuve (2) d'un dispositif (1) dudit système (11) par un circuit d'écoulement (5) ;
- des ondes acoustiques de haute fréquence, supérieure à 100 kHz, préférentiellement supérieure à 200kHz sont générées dans ladite cuve (2) par l'élément piézo-électrique (6) ;
- les ondes acoustiques se propagent dans la cuve (2) et focalisent en un point situé au voisinage de la partie centrale de l'ouverture (3) de la cuve et sortent dans le conduit (7) ; lesdites ondes permettant le traitement du produit solide ; et
- le produit solide ainsi traité est récupéré.

**Patentansprüche**

1. Verfahren zum Behandeln einer Flüssigkeit (4) durch hochfrequente Schallwellen in einer Vorrichtung (1) eines Systems (11), umfassend mindestens zwei Vorrichtungen (1) zum Behandeln durch Schallwellen, die Vorrichtungen mindestens umfassend:

- einen länglichen, offenen Tank (2), dessen Querschnitt eine zunehmende Verengung in Richtung einer Öffnung (3), die sich auf dem oberen Teil des Tanks befindet, aufweist, und
- ein piezoelektrisches Element (6), wobei der Tank mit einer Flüssigkeit (4) gefüllt ist, wobei das piezoelektrische Element (6) geeignet ist, Wellen in der Flüssigkeit (4) auszusenden, wobei die Wellen in der Nähe der Öffnung (3) des Tanks fokussiert werden und in eine Leitung (7) austreten,
**dadurch gekennzeichnet, dass** die Auslässe (8) der unterschiedlichen Leitungen (7) der Vorrichtungen (1), die einen Durchmesser, der zwischen 4 mm und 50 mm liegt, aufweisen, in einem Abflusssammler (9) zusammenlaufen und dadurch, dass die erzeugten Wellen in jeder Vorrichtung (1) durch das piezoelektrische Element (6) in dem Tank (2) und/oder in der Leitung (7) eine Frequenz höher als 100 kHz aufweisen. und **dadurch gekennzeichnet, dass** es die folgenden Schritte umfasst, gemäß denen:

- eine zu behandelnde Flüssigkeit (4) in den Tank (2) der Vorrichtung durch einen Flusspfad (5) eingeleitet wird;
- hochfrequente Schallwellen, höher als 100 kHz, vorzugsweise höher als 200 kHz, in dem Tank (2) durch das piezoelektrische Element (6) generiert werden;
- die Schallwellen sich in dem Tank (2) ausbreiten und an einem Punkt, der sich in der Nähe des mittleren Teils der Öffnung (3) des Tanks befindet, fokussiert werden und in die Leitung (7) austreten; wobei die Wellen das Behandeln der Flüssigkeit (4) ermöglichen; und
- die so behandelte Flüssigkeit in dem Auslass der Leitung (7) oder in dem Auslass des Abflusssammlers (9) zurückerhalten wird.

2. Verfahren nach Anspruch 1, **dadurch gekennzeichnet, dass** die Flüssigkeit (4) Folgendes ist:

- eine zu behandelnde Flüssigkeit und/oder
- eine Behandlungsflüssigkeit, die das Behandeln eines Feststofferzeugnisses ermöglicht, das sich in dem Tank (2), in dem und/oder an dem Auslass der Leitung (7) befindet.

3. Verfahren nach einem der Ansprüche 1 oder 2, **dadurch gekennzeichnet, dass** die in der Vorrichtung (1) durch das piezoelektrische Element (6) in dem Tank (2) und/oder in der Leitung (7) erzeugten Wellen eine Frequenz höher als 200 kHz aufweisen.

4. Verfahren nach Anspruch 3, **dadurch gekennzeichnet, dass** die in der Vorrichtung (1) durch das piezoelektrische Element (6) in dem Tank (2) und/oder in der Leitung (7) erzeugten Wellen eine Frequenz, die zwischen 1 MHz und 5 MHz liegt, aufweisen.

5. Verfahren nach einem der vorstehenden Ansprüche, **dadurch gekennzeichnet, dass** die Wände des Tanks (2) und der Leitung (7) in der Vorrichtung (1) aus hartem Material sind, das geeignet ist, die Wellen zu reflektieren, und vorzugsweise ausgebildet sind, um zu veranlassen, dass sich die Wellen in einem Punkt, der sich in der Nähe des mittleren Teils der Öffnung (3) des Tanks und/oder in dem mittleren Teil der Leitung (7) befindet, fokussieren.

**6.** Verfahren nach einem der vorstehenden Ansprüche, **dadurch gekennzeichnet, dass** der Tank (2) der Vorrichtung (1) eine Form eines Rotationsparaboloids aufweist, dessen Schwerpunkt sich in der Nähe des mittleren Teils der Öffnung (3) des Tanks befindet.

**7.** Verfahren nach einem der vorstehenden Ansprüche, **dadurch gekennzeichnet, dass** das System (11) zum Reinigen und/oder Dekontaminieren von Flüssig- und/oder Feststofferzeugnissen verwendet wird.

**8.** Verfahren nach einem der vorstehenden Ansprüche, **dadurch gekennzeichnet, dass** das System (11) zum Behandeln von Flüssig- und/oder Feststofferzeugnissen verwendet wird, vorzugsweise zum:

- Mineralisieren von löslichen Erzeugnissen in der Flüssigkeit (4), auch Trägerflüssigkeit genannt;
- Zerstören von Wirkstoffen wie Pestiziden oder Medikamenten vor dem Abstoßen in das Abwasser; oder
- Behandeln von Wasser, um es "trinkbar" zu machen.

**9.** Verfahren nach einem der vorstehenden Ansprüche, **dadurch gekennzeichnet, dass** das System (11) verwendet wird zum:

- Extrahieren von Wirkstoffen;
- Löslichmachen oder Homogenisieren von Flüssig- und/oder Feststofferzeugnissen in der Flüssigkeit 4;
- Herstellen einer Emulsion;
- Zubereiten von Kolloiden und/oder chemischen Verbindungen.

**10.** Verfahren zum Behandeln eines Feststofferzeugnisses, das sich in dem Tank (2), in und/oder an dem Auslass der Leitung (7) einer Vorrichtung (1) eines Systems (11) befindet, umfassend mindestens zwei Vorrichtungen (1) zum Behandeln der Vorrichtungen durch Schallwellen, mindestens umfassend:

- einen länglichen, offenen Tank (2), dessen Querschnitt eine zunehmende Verengung in Richtung einer Öffnung (3), die sich auf dem oberen Teil des Tanks befindet, aufweist, und
- ein piezoelektrisches Element (6), wobei der Tank mit einer Flüssigkeit (4) gefüllt ist, wobei das piezoelektrische Element (6) geeignet ist, Wellen in der Flüssigkeit (4) auszusenden, wobei die Wellen in der Nähe der Öffnung (3) des Tanks fokussiert werden und in eine Leitung (7) austreten,
**dadurch gekennzeichnet, dass** die Auslässe (8) der unterschiedlichen Leitungen (7) der Vorrichtungen (1), die einen Durchmesser, der zwischen 4 mm und 50 mm liegt, aufweisen, in einem Abflusssammler (9) zusammenlaufen und dadurch, dass die erzeugten Wellen in jeder Vorrichtung (1) durch das piezoelektrische Element (6) in dem Tank (2) und/oder in der Leitung (7) eine Frequenz höher als 100 kHz aufweisen, durch hochfrequente Schallwellen, **dadurch gekennzeichnet, dass** es die folgenden Schritte umfasst, gemäß denen:

- eine Flüssigkeit (4) in den Tank (2) einer Vorrichtung (1) des Systems (11) durch einen Flusspfad (5) eingeleitet wird;
- hochfrequente Schallwellen, höher als 100 kHz, vorzugsweise höher als 200 kHz, in dem Tank (2) durch das piezoelektrische Element (6) generiert werden;
- die Schallwellen sich in dem Tank (2) ausbreiten und an einem Punkt, der sich in der Nähe des mittleren Teils der Öffnung (3) des Tanks befindet, fokussiert werden und in die Leitung (7) austreten; wobei die Wellen das Behandeln des Feststofferzeugnisses ermöglichen; und
- das so behandelte Feststofferzeugnis zurückerhalten wird.

**Claims**

**1.** Method for treating a liquid (4) with high-frequency acoustic waves in a device (1) of a system (11) comprising at least two devices (1) for acoustic wave treatment, said devices comprising at least:

- an open, elongate vessel (2) of which the cross-section tapers progressively toward an opening (3) at the top of the vessel, and
- a piezoelectric element (6), said vessel being filled with a liquid (4), the piezoelectric element (6) being capable of emitting waves into said liquid (4), said waves being focused in the vicinity of the vessel opening (3) and exiting into a duct (7),
**characterized in that** the outlets (8) of the various ducts (7) of the devices (1), said ducts having a diameter of between 4 mm and 50 mm, converge in a flow collector (9) **and in that** the waves generated in each device (1) by the piezoelectric element (6) in the vessel (2) and/or in the duct (7) have a frequency greater than 100 kHz.

and **characterized in that** the method comprises the following steps according to which:

- a liquid to be treated (4) is introduced into the vessel (2) of said device via a flow circuit (5);
- high-frequency acoustic waves, greater than 100 kHz, preferably greater than 200 kHz, are generated in said vessel (2) by the piezoelectric element (6);
- the acoustic waves propagate in the vessel (2) and focus on a point located in the vicinity of the central portion of the vessel opening (3) and exit into the duct (7); said waves allowing the liquid (4) to be treated; and
- the liquid thus treated is recovered at the outlet of the duct (7) or at the outlet of the flow collector (9).

2. Method according to claim 1, **characterized in that** the liquid (4) is:

- a liquid to be treated, and/or
- a treatment liquid for treating a solid product located in the vessel (2), in and/or at the outlet of the duct (7).

3. Method according to one of claims 1 or 2, **characterized in that** the waves generated in the device (1) by the piezoelectric element (6) in the vessel (2) and/or in the duct (7) have a frequency greater than 200 kHz.

4. Method according to claim 3, **characterized in that** the waves generated in the device (1) by the piezoelectric element (6) in the vessel (2) and/or in the duct (7) have a frequency of between 1 MHz and 5 MHz.

5. Method according to any of the preceding claims, **characterized in that** the walls of the vessel (2) and of the duct (7) in the device (1) are made of a hard, wave-reflecting material, and are preferably shaped in such a way as to cause the waves to focus on a point located in the vicinity of the central portion of the vessel opening (3) and/or in the central portion of the duct (7).

6. Method according to any of the preceding claims, **characterized in that** the vessel (2) of the device (1) has the shape of a paraboloid of revolution of which the focal point lies in the vicinity of the central portion of the vessel opening (3).

7. Method according to any of the preceding claims, **characterized in that** said system (11) is used for cleaning and/or decontaminating liquid and/or solid products.

8. Method according to any of the preceding claims, **characterized in that** said system (11) is used for the treatment of liquid and/or solid products, preferably for:

- the mineralization of products solubilized in the liquid (4), also known as the carrier fluid;
- the destruction of active ingredients such as pesticides or drugs before they are released into wastewater; or
- water treatment for "potabilization".

9. Method according to any of the preceding claims, **characterized in that** said system (11) is used for:

- the extraction of active ingredients;
- solubilizing or homogenizing liquid and/or solid products in liquid 4;
- emulsion production;
- the preparation of colloids and/or chemical compounds.

10. Method for treating a solid product located in the vessel (2), in and/or at the outlet of the duct (7) of a device (1) of a system (11), comprising at least two devices (1) for acoustic wave treatment, said devices comprising at least:

- an open, elongate vessel (2) of which the cross-section tapers progressively toward an opening (3) at the top of the vessel, and
- a piezoelectric element (6), said vessel being filled with a liquid (4), the piezoelectric element (6) being capable of emitting waves into said liquid (4), said waves being focused in the vicinity of the vessel opening (3) and exiting into a duct (7),
**characterized in that** the outlets (8) of the various ducts (7) of the devices (1), said ducts having a diameter of between 4 mm and 50 mm, converge in a flow collector (9) **and in that** the waves generated in each device (1) by the piezoelectric element (6) in the vessel (2) and/or in the duct (7) have a frequency greater than 100 kHz,
by high-frequency acoustic waves, **characterized in that** the method comprises the following steps according to which:

- a liquid (4) is introduced into the vessel (2) of a device (1) of said system (11) via a flow circuit (5);
- high-frequency acoustic waves, greater than 100 kHz, preferably greater than 200 kHz, are generated in said vessel (2) by the piezoelectric element (6);
- the acoustic waves propagate in the vessel (2) and focus on a point located in the vicinity of the central portion of the vessel opening (3) and exit into the duct (7); said waves allowing the solid product to be treated; and
- the solid product thus treated is recovered.

Fig. 1

Fig. 2

Fig. 3

Surface: Niveau de pression acoustique (dB)

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015089186 A

- EP 3009405 A